Europäisches Patentamt

European Patent Office

Office européen des brevets

(11) Veröffentlichungsnummer : **0 042 130 B1**

(12) **EUROPÄISCHE PATENTSCHRIFT**

(45) Veröffentlichungstag der Patentschrift :
11.04.84

(21) Anmeldenummer : 81104407.2

(22) Anmeldetag : 09.06.81

(51) Int. Cl.³ : **C 04 B 35/60, C 04 B 35/48, C 04 B 35/58**

(54) Keramischer Formkörper mit eutektischen Gefügebestandteilen und Verfahren zu seiner Herstellung.

(30) Priorität : 13.06.80 DE 3022213

(43) Veröffentlichungstag der Anmeldung :
23.12.81 Patentblatt 81/51

(45) Bekanntmachung des Hinweises auf die Patenterteilung : 11.04.84 Patentblatt 84/15

(84) Benannte Vertragsstaaten :
AT BE FR IT NL SE

(56) Entgegenhaltungen :
DE-A- 2 500 665
DE-A- 2 519 569
DE-A- 2 738 974
DE-A- 2 744 700
DE-A- 2 920 795
DE-B- 1 646 429

(73) Patentinhaber : Feldmühle Aktiengesellschaft
Fritz-Vomfelde-Platz 4
D-4000 Düsseldorf 11 (DE)

(72) Erfinder : Dworak, Ulf, Dr. Dipl.-Mineraloge
Pfarrstrasse 50
D-7066 Baltmannsweiler 2 (DE)
Erfinder : Olapinski, Hans, Dr. Dipl.-Chem.
Talstrasse 12
D-7307 Aichwald 1 (DE)
Erfinder : Krohn, Ulrich, Dr. Dipl.-Ing.
Friedrich-Haug-Strasse 5
D-7520 Leonberg 1 (DE)

(74) Vertreter : Uhlmann, Hans, Dr. rer. nat., Dipl.-Chem.
Gladbacher Strasse 189
D-4060 Viersen 1 (DE)

Keramischer Formkörper mit eutektischen Gefügebestandteilen und Verfahren zu seiner Herstellung

Die vorliegende Erfindung betrifft einen keramischen Formkörper auf Basis von dichten, nichtmetallischen Hartstoffen, wie z. B. hochschmelzenden Metallcarbiden, Metallnitriden, Metallboriden und Metalloxiden, insbesondere Aluminiumoxid und Zirkonoxid. Die Erfindung betrifft auch Verfahren zur Herstellung der erfindungsgemäßen Formkörper.

Keramische Formkörper aus Sinterwerkstoffen haben bereits in weiten Bereichen der industriellen Technik Eingang gefunden. Ihre Anwendung erfolgt vor allem da, wo es auf hohe Härte und die dadurch bedingte Verschleißfestigkeit, sowie auf gute Temperaturbeständigkeit ankommt. Ihrer weiteren Ausbreitung steht aber eine für viele Anwendungsbereiche noch zu geringe Bruchzähigkeit, ausgedrückt als $K_{Ic}$-Wert entgegen.

Es hat in der Vergangenheit nicht an Bemühungen gefehlt, die mechanische Festigkeit von gesinterten Keramikformkörpern zu verbessern. In der DE-A-25 49 652 wird die Einlagerung von bei Raum- und Brenntemperatur in verschiedenen enantiotropen festen Modifikationen vorliegenden Stoffen vorgeschlagen. Bei der Abkühlung der Formkörper im Anschluß an den Brennprozeß entstehen dabei Mikrorisse, die in der Lage sind, auf den Formkörper einwirkende Energien durch unterkritisches Wachstum zu absorbieren.

Gemäß einem in der DE-A-27 44 700 enthaltenen Vorschlag der Anmelderin enthält ein Sinterwerkstoff Zirkonoxid und/oder Hafniumoxid in bei Raumtemperatur metastabiler tetragonaler Modifikation. Auf einen, aus einem solchen Sinterwerkstoff hergestellten Formkörper einwirkende Spannung führt zu einer Umwandlung der metastabilen tetragonalen in die monokline Modifikation und damit zu einem Spannungsabbau.

Aus der DE-B-1 646 429 ist ein schmelzgegossenes, feuerfestes Material, das vorwiegend aus Magnesiumoxid und Zirkonoxid besteht und ggf. geringe Beimengungen von Siliziumoxid, Eisenoxid, Berylliumoxid, Aluminiumoxid und Chromoxid enthalten kann, bekannt. Nachteilig bei diesem Material ist die geringe Bruchfestigkeit.

Schließlich beschreibt die DE-A-2 519 569 — ohne auf die Herstellung von Formkörpern einzugehen — ein auf Basis von Aluminiumoxid und Zirkonoxid gebildetes Schleifkorn, das eutektische Gefügebestandteile enthält und ein Verfahren zur Herstellung dieses Schleifkorns, das eine rasche Abkühlung der Metalloxidschmelze durch Eingießen in ein in geschmolzenem Zustand vorliegendes Salz vorsieht.

Für viele Anwendungsgebiete reichen die bisher erzielten Ergebnisse jedoch nicht aus. Die Aufgabe der vorliegenden Erfindung besteht demnach in der Schaffung von Formkörpern mit verbesserten Werkstoffeigenschaften, wie Härte, Verschleißeigenschaften und Thermoschockbeständigkeit, insbesondere aber in einer weiteren Verbesserung der Biegebruchfestigkeit und des $K_{Ic}$-Wertes.

Überraschenderweise läßt sich diese Aufgabe dadurch lösen, und es ergibt sich ein Formkörper mit wesentlich verbesserten Eigenschaften, wenn ein durch Sintern oder Heißpressen hergestellter keramischer Formkörper auf Basis von dichten, nichtmetallischen Hartstoffen wie hoch schmelzenden Metallcarbiden, Metallnitriden, Metallboriden und Metalloxiden, insbesondere Aluminiumoxid und Zirkonoxid, der in homogener Verteilung Zirkonoxid und/oder Hafniumoxid geringer Teilchengröße in bei Raumtemperatur metastabiler tetragonaler Modifikation enthält, dadurch gekennzeichnet ist, daß der Formkörper ein oder mehrere eutektische Gefügebestandteile aus Zirkonoxid und/oder Hafniumoxid und zumindest einem weiteren hochschmelzenden Metalloxid enthält oder daß er daraus besteht.

Zur Vereinfachung wird nachfolgend die Erfindung am Beispiel des Zirkonoxids als Komponente einer der eutektischen Gefügebestandteile beschrieben, gilt sinngemäß aber auch für Hafniumoxid, zumal die im Handel befindlichen Zirkonoxidmaterialien vielfach Spuren von Hafniumoxid aufweisen und Hafniumoxid die gleichen eingangs geschilderten Eigenschaften hinsichtlich der Umwandlung der metastabilen tetragonalen Modifikation in die monokline aufweist.

Der Vorteil der erfindungsgemäßen Formkörper liegt darin, daß die in eutektischer Reaktion gebildeten Gefügebestandteile in einer solchen gleichmäßigen Feinheit vorliegen, wie sie mit den bisher gebräuchlichen Technologien in Formkörpern nicht erzielbar war. Selbst bei sorgsamst durchgeführter Mahlung und Sortierung der bisher zur Herstellung von gesinterten keramischen Formkörpern verwendeten Ausgangspulver weisen diese in ihrem unteren und oberen Größenbereich Teilchen auf, die in zum Teil erheblicher Anzahl um das ca. drei- bis zehnfache von ihrem üblicherweise als Medianwert bezeichneten Mittelwert abweichen. Die Größenschwankung der in eutektischer Reaktion gebildeten Metalloxid- und Zirkonoxid-Kristallite ist demgegenüber minimal und führt dadurch zu einer außerordentlich hohen Gleichmäßigkeit des Gefüges. Hierdurch gelingt es in wesentlich verbesserter Weise als bisher, keramische Formkörper mit einem hohen Zirkonoxidanteil in äußerst feiner und gleichmäßiger Verteilung herzustellen. Die Zirkonoxidanteile liegen dabei in erheblichem Umfang in metastabiler tetragonaler Modifikation vor. Bei durch mechanische Einflüsse auf den erfindungsgemäßen keramischen Formkörper einwirkender Energie erfolgt eine Umwandlung der in metastabiler tetragonaler Modifikation vorliegenden Kristallite in die bei Raumtemperatur stabile monokline Modifikation. Dabei wird durch die hohen $ZrO_2$-Anteile eine wesentlich höhere Energieabsorption ermöglicht.

Neben Zirkonoxid und/oder Hafniumoxid enthalten die keramischen Formkörper in einer bevorzugten Ausführungsform als weiteren eutektischen Gefügebestandteil Berylliumoxid.

Ganz besonders bevorzugt ist jedoch ein keramischer Formkörper, der dadurch gekennzeichnet ist, daß in dem oder den eutektischen Gefügebestandteilen neben Zirkonoxid und/oder Hafniumoxid Aluminiumoxid enthalten ist. Ein solcher Formkörper weist eine hohe Temperaturbeständigkeit auf und ist unter fertigungstechnischen Gesichtspunkten besonders vorteilhaft und wirtschaftlich herstellbar.

Durch die Verwendung eutektischer Gefügebestandteile ist es in weitaus höherem Maße als bisher möglich, die keramischen Formkörper dem jeweiligen Anwendungsgebiet anzupassen. Zur Herstellung keramischer Formkörper mit besonders guten Festigkeitswerten hat es sich dabei als zweckmäßig erwiesen, einen hohen Anteil eutektischer Gefügebestandteile zu verwenden. Je höher der Anteil dieser Bestandteile ist, desto bessere Festigkeiten lassen sich erzielen. In einer ganz besonders bevorzugten Ausführungsform besteht deshalb ein keramischer Formkörper vollständig oder überwiegend aus einem eutektischen Gefügebestandteil aus Aluminiumoxid und Zirkonoxid und/oder Hafniumoxid.

Eine weitere Verbesserung liegt darin, daß ein keramischer Formkörper vollständig oder überwiegend aus einem eutektischen Gefügebestandteil aus 1) Aluminiumoxid, 2) Zirkonoxid und/oder Hafniumoxid und 3) Yttriumoxid und/oder Magnesiumoxid und/oder Ytterbiumoxid besteht. Ein solches Eutektikum weist eine noch feinere Verteilung des Zirkonoxids auf, als dies ohne Verwendung der den Schmelzpunkt herabsetzenden Oxide des Yttriums, Magnesiums oder Ytterbiums der Fall ist.

Eine noch bessere Anpassung an das geforderte Eigenschaftsprofil ist mit einem keramischen Formkörper möglich, der zumindest zwei eutektische Gefügebestandteile unterschiedlichen Schmelzpunktes enthält oder daraus besteht, wobei zumindest einer der eutektischen Gefügebestandteile Yttriumoxid und/oder Magnesiumoxid und/oder Ytterbiumoxid enthält.

Wenn auch die angestrebte Wirkung der Eigenschaftsverbesserung in optimaler Weise erhalten wird, wenn die Bestandteile Zirkonoxid und/oder Hafniumoxid und das weitere Metalloxid in einer prozentualen Zusammensetzung vorliegen, bei der sie ein Eutektikum bilden, so liegt es durchaus im Rahmen der Erfindung und kann zur Erzielung bestimmter Effekte vorteilhaft sein, auch außerhalb der eutektischen Zusammensetzung zu arbeiten, also im unter- bzw. übereutektischem Bereich, so daß sich zunächst hochschmelzendes Metalloxid bzw. überschüssiges Zirkonoxid und/oder Hafniumoxid als Primärphase ausscheidet und erst dann der oder die eutektischen Gefügebestandteile. Dadurch, daß auch diese primär ausgeschiedenen Teilchen in gleichmäßigerer Verteilung vorliegen, als das nach den konventionellen Methoden des Vermischens und Vermahlens erreichbar ist, zeichnen sich auch diese Formkörper durch gute Verschleißeigenschaften, Thermoschockbeständigkeit und große Härte aus — zumal die Wirkung der eutektischen Gefügebestandteile auch beim Arbeiten im unter- bzw. übereutektischen Bereich voll erhalten bleibt.

Die Herstellung der erfindungsgemäßen keramischen Formkörper kann im wesentlichen mit den üblichen Verfahren und Vorrichtungen erfolgen, wie sie im keramischen Herstellungsbetrieb bisher bereits verwendet wurden. Von entscheidender Bedeutung bei der Herstellung der erfindungsgemäßen keramischen Formkörper ist es jedoch, daß die Abkühlgeschwindigkeit des keramischen Formkörpers und damit die Ausbildung der eutektischen Gefügebestandteile so reguliert wird, daß sich eine hohe Gleichmäßigkeit im Abstand der einzelnen Zirkonoxidkristallite und eine geringe Teilchengröße ergibt.

Zur Herstellung von keramischen Formkörpern mit besonderes hohen Festigkeiten hat sich als ganz besonders vorteilhaft ein Verfahren erwiesen, bei dem ein Pulver mehrerer Metalloxide im untereutektischen, eutektischen oder übereutektischen Verhältnis gemischt, geschmolzen und nach rascher Abkühlung pulverisiert wird und aus dem so erhaltenen Pulver ein Körper geformt und gesintert oder druckgesintert wird. Dieses Verfahren ist bevorzugt, weil Art und Anteil der eutektischen Gefügebestandteile beliebig einstellbar sind, je nach dem, ob in untereutektischem, übereutektischem oder genau im eutektischem Bereich gearbeitet wird. Die Sintertemperaturen liegen hierbei üblicherweise unterhalb des Schmelzpunktes der einzelnen Komponenten.

In einer weiteren zweckmäßigen Verfahrensvariante wird ein erstes Pulver im untereutektischen, eutektischen oder übereutektischen Verhältnis gemischt, geschmolzen und nach rascher Abkühlung pulverisiert und diesem ersten Pulver ein pulverförmiges Metalloxid zugesetzt und anschließend aus der Mischung aus erstem Pulver und zugesetztem pulverförmigem Metalloxid ein Körper geformt, gesintert oder druckgesintert.

Für bestimmte Materialkombinationen hat sich ein Sinterverfahren als besonders zweckmäßig herausgestellt, bei dem eine Materialkomponente in flüssiger Phase verwendet wird. In einer besonders vorteilhaften Ausführungsform wird dabei ein erstes Pulver in untereutektischem, eutektischem oder übereutektischem Mischungsverhältnis gemischt, erschmolzen und nach rascher Abkühlung pulverisiert und dem so erhaltenen ersten Pulver ein zweites Pulver zugemischt, das aus einem hochschmelzen dem Metallcarbid, Metallnitrid, Metallborid, Metalloxid oder aus einer Kombination dieser Komponenten besteht, und aus der Mischung der beiden Pulver ein Körper geformt und über dem Schmelzpunkt des ersten Pulvers und unter dem Schmelzpunkt der niedrigstschmelzenden Komponente des zweiten Pulvers gesintert oder druckgesintert. Die flüssige Phase löst bei diesem Verfahren oberflächlich die in festem Zustand verbleibenden Teilchen des zweiten Pulvers an, wobei die durch Ausdehnungsanisotropien hervorgerufenen Spannungen an den Korngrenzen der Teilchen des zweiten Pulvers verringert werden. Dadurch werden höhere Festigkeiten erzielt. Bevorzugt liegt der Anteil der flüssigen Phase bei 5 bis 25 Volumenprozent.

Ein weitere vorteilhafte Ausführungsform des erfindungsgemäßen Verfahrens besteht darin, daß ein aus Metalloxiden bestehendes Pulver in untereutektischem, eutektischem oder übereutektischem Verhältnis gemischt, erschmolzen und nach rascher Abkühlung pulverisiert wird und ein zweites solches Pulver, das zusätzlich Yttriumoxid und/oder Magnesiumoxid und/oder Ytterbiumoxid enthält, gemischt, geschmolzen und nach rascher Abkühlung pulverisiert wird, aus der Mischung der beiden Pulver ein Körper geformt und gesintert oder druckgesintert wird, wobei die Sintertemperaturen über dem Schmelzpunkt des niedriger schmelzenden und unter dem Schmelzpunkt des höher schmelzenden Pulvers liegen.

Zur Herstellung eines keramischen Formkörpers, der zusätzlich zu mehreren unterschiedlichen eutektischen Gefügebestandteilen noch weitere nichtmetallische Hartstoffe enthält, hat sich ein Verfahren als geeignet erwiesen, bei dem ein erstes Pulver in untereutektischem, eutektischem oder übereutektischem Verhältnis gemischt, geschmolzen und nach rascher Abkühlung pulverisiert geschmolzen und nach rascher Abkühlung pulverisiert wird, ein zweites Pulver in untereutektischer, eutektischer oder übereutektischer Zusammensetzung, das zusätzlich Yttriumoxid und/oder Magnesiumoxid und/oder Ytterbiumoxid enthält, gemischt, geschmolzen und nach rascher Abkühlung pulverisiert wird, der Mischung aus erstem und zweitem Pulver ein weiteres Pulver, das aus einem hochschmelzenden Metallcarbid, Metallnitrid, Metallborid, Metalloxid oder aus einer Kombination dieser Komponenten besteht, zugesetzt wird und aus der Mischung der Pulver ein Körper geformt und über dem Schmelzpunkt des am niedrigsten schmelzenden Pulvers und unter dem Schmelzpunkt der weiteren Pulver gesintert oder druckgesintert wird. Neben den bereits erwähnten Vorteilen der Sinterverfahren, bei denen eine flüssige Phase Verwendung findet, liegt ein weiterer Vorteil darin, daß durch die Vermischung der flüssigen mit den festen Bestandteilen eine außerordentlich gute Verteilung der in flüssiger Phase eingelagerten eutektischen Bestandteile mit den übrigen in fester Form verwendeten Bestandteilen des Formkörpers erzielt wird.

Als Beispiele für Formkörper, die gemäß der vorliegenden Erfindung hergestellt werden können, sind zu nennen : Schneidplatten, Turbinenschaufeln, Friktionsscheiben, Gleitringdichtungen, Fadenführorgane, Umformwerkzeuge, Kipphebelbeläge, Zylinderlaufbüchsen und Dichtscheiben.

Die nachfolgenden Beispiele dienen der weiteren Erklärung der Erfindung, ohne diese auf die Beispiele zu beschränken :

Beispiel 1

Zirkonoxid und Aluminiumoxid werden im eutektischen Verhältnis gemischt. Die Pulvermischung wird geschmolzen und nach rascher Abkühlung in einer Schwingmühle 32 h naß gemahlen. Anschließend wird getrocknet und granuliert. Das entstandene Pulver weist eine spezifische Oberfläche (BET-Methode) von 6m$^2$/g auf. Dieses Pulver wird in einer Graphitmatrize bei 1 450 °C 4 min lang bei einem Druck von 5,5 bar unter Argonatmosphäre heißgepreßt. Aus den erhaltenen zylindrischen Formkörpern werden prismatische Prüfstäbchen mit den Abmessungen 13 × 2,5 × 3,5 mm herausgetrennt und Biegebruchfestigkeit und Bruchwiderstand ermittelt.

$$\sigma_{bB} = 840 \pm 65 \text{ N/mm}^2$$

und

$$K_{lc} = 450 \pm 50 \text{ N/mm}^{3/2}$$

Die Kleinlasthärte liegt bei Hv = 14 kN/mm$^{3/2}$, ermittelt mit einer Belastung von 500 g unter Verwendung einer Vickerspyramide.

Das eutektische Gefüge besteht aus einer kontinuierlichen Al$_2$O$_3$-reichen Phase und darin in extrem feiner und gleichmäßiger Form verteilter, vorwiegend stäbchenförmiger ZrO$_2$-reichen Phase. Die ZrO$_2$-Stäbchen, Lamellen oder Ellipsoide weisen einen mittleren Durchmesser von 200 nm und einem mittleren Abstand von 500 nm auf.

Beispiel 2

50 g des in Beispiel 1 aufbereiteten Pulvers aus Zirkonoxid und Aluminiumoxid in eutektischer Zusammensetzung werden mit 445 g Al$_2$O$_3$ (mittlere Teilchengröße 0,7 μm, spezifische Oberfläche nach BET 7,4 m$^2$/g) und 5 g Spinell gemahlen, mit Polyvinylalkohol als Bindemittel versehen, gesprüht, nochmals in einer Schwingmühle 13 Stunden trocken gemahlen, mit Wasser befeuchtet, granuliert und über 630 μm gesiebt. Aus dem so erhaltenen Granulat wurden Prüfkörper (6 × 4 × 32 mm) bei 1 500 bar gepreßt und bei 1 750 °C 80 min bei 130 bar unter Argon drucklos gesintert.

Die erhaltenen Formkörper wiesen Festigkeiten von

$$\sigma_{bB} = 380 \pm 30 \text{ N/mm}^2$$

und

$$K_{lc} = 210 \text{ N/mm}^{3/2}$$

auf.

**Ansprüche**

1. Keramischer Formkörper auf Basis von dichten, nichtmetallischen Hartstoffen, wie hochschmelzenden Metallcarbiden, Metallnitriden, Metallboriden und Metalloxiden, insbesondere Aluminiumoxid und Zirkonoxid, der in homogener Verteilung Zirkonoxid und/oder Hafniumoxid geringer Teilchengröße in bei Raumtemperatur metastabiler tetragonaler Modifikation enthält und durch Sintern oder Heißpressen hergestellt ist, dadurch gekennzeichnet, daß der Formkörper ein oder mehrere eutektische Gefügebestandteile aus Zirkonoxid und/oder Hafniumoxid und zumindest einem weiteren hochschmelzenden Metalloxid enthält oder daß er daraus besteht.

2. Keramischer Formkörper nach Anspruch 1, dadurch gekennzeichnet, daß in dem oder den eutektischen Gefügebestandteilen Berylliumoxid enthalten ist.

3. Keramischer Formkörper nach Anspruch 1, dadurch gekennzeichnet, daß in dem oder den eutektischen Gefügebestandteilen Aluminiumoxid enthalten ist.

4. Keramischer Formkörper nach einem der Ansprüche 1 und 3, dadurch gekennzeichnet, daß er vollständig oder überwiegend aus einem eutektischen Gefügebestandteil aus Aluminiumoxid und Zirkonoxid und/oder Hafniumoxid besteht.

5. Keramischer Formkörper nach einem der Ansprüche 1 und 3, dadurch gekennzeichnet, daß er vollständig oder überwiegend aus einem eutektischen Gefügebestandteil aus : 1) Aluminiumoxid, 2) Zirkonoxid und/oder Hafniumoxid und 3) Yttriumoxid und/oder Magnesiumoxid und/oder Ytterbiumoxid besteht.

6. Keramischer Formkörper nach einem der Ansprüche 1 und 3, dadurch gekennzeichnet, daß er zumindest zwei eutektische Gefügebestandteile unterschiedlichen Schmelzpunktes enthält oder daraus besteht, wobei zumindest einer der eutektischen Gefügebestandteile Yttriumoxid und/oder Magnesiumoxid und/oder Ytterbiumoxid enthält.

7. Verfahren zum Herstellen eines keramischen Formkörpers gemäß einem der Ansprüche 1 bis 5, dadurch gekennzeichnet, daß ein Pulver in untereutektischem, eutektischem oder übereutektischem Verhältnis gemischt, geschmolzen und nach rascher Abkühlung pulverisiert wird und aus dem so erhaltenen Pulver ein Körper geformt und gesintert oder druckgesintert wird.

8. Verfahren zum Herstellen eines keramischen Formkörpers gemäß einem der Ansprüche 1 bis 5, dadurch gekennzeichnet, daß ein erstes Pulver in untereutektischem, eutektischem oder übereutektischem Verhältnis gemischt, geschmolzen und nach rascher Abkühlung pulverisiert wird und dem so erhaltenen Pulver pulverförmiges Metalloxid zugesetzt wird und aus der Mischung aus dem ersten Pulver und dem Pulver des Metalloxids ein Körper geformt und gesintert oder druckgesintert wird.

9. Verfahren zum Herstellen eines keramischen Formkörpers gemäß einem der Ansprüche 1 bis 5, dadurch gekennzeichnet, daß ein erstes Pulver in untereutektischem, eutektischem oder übereutektischem Verhältnis gemischt, geschmolzen und nach rascher Abkühlung pulverisiert wird und dem so erhaltenen ersten Pulver ein zweites Pulver zugemischt wird, das aus einem hochschmelzenden Metallcarbid, Metallnitrid, Metallborid, Metalloxid oder aus einer Kombination dieser Komponenten besteht und aus der Mischung der beiden Pulver ein Körper geformt und über dem Schmelzpunkt des ersten Pulvers und unter dem Schmelzpunkt der niedrigstschmelzenden Komponente des zweiten Pulvers gesintert oder druckgesintert wird.

10. Verfahren zum Herstellen eines keramischen Formkörpers gemäß den Ansprüchen 1 bis 6, dadurch gekennzeichnet, daß ein erstes Pulver in untereutektischem, eutektischem oder übereutektischem Verhältnis gemischt, geschmolzen und nach rascher Abkühlung pulverisiert wird und ein zweites Pulver in untereutektischer, eutektischer oder übereutektischer Zusammensetzung, das zusätzlich Yttriumoxid und/oder Magnesiumoxid und/oder Ytterbiumoxid enthält, gemischt, geschmolzen und nach rascher Abkühlung pulverisiert wird und daß das erste Pulver mit dem zweiten Pulver gemischt wird und aus der Mischung ein Körper geformt wird, der Körper über dem Schmelzpunkt des niedriger schmelzenden und unter dem Schmelzpunkt des höherschmelzenden Pulvers gesintert oder druckgesintert wird.

11. Verfahren zum Herstellen eines keramischen Formkörpers gemäß den Ansprüchen 1 und 6, dadurch gekennzeichnet, daß ein erstes Pulver in untereutektischem, eutektischem oder übereutektischem Verhältnis gemischt, geschmolzen und nach rascher Abkühlung pulverisiert wird, ein zweites Pulver in untereutektischer, eutektischer oder übereutektischer Zusammensetzung, das Yttriumoxid und/oder Magnesiumoxid und/oder Ytterbiumoxid enthält, gemischt, geschmolzen und nach rascher Abkühlung pulverisiert wird, der Mischung aus erstem und zweitem Pulver ein weiteres Pulver, das aus einem hochschmelzenden Metallcarbid, Metallnitrid, Metallborid, Metalloxid oder aus einer Kombination dieser Komponenten besteht, zugesetzt wird und aus der Mischung der Pulver ein Körper geformt und über dem Schmelzpunkt des am niedrigsten schmelzenden Pulvers und unter dem Schmelzpunkt der weiteren Pulver gesintert oder druckgesintert wird.

**Claims**

1. Ceramic shaped article, which is based on dense, non-metallic, mechanically resistant materials, such as high-melting metal carbides, metal nitrides, metal borides and metal oxides, especially aluminium oxide and zirconium oxide, and which contains, in homogeneous distribution, zirconium oxide and/or hafnium oxide of small particle size in tetragonal modification metastable at room temperature, and which is manufactured by sintering or hot pressing, characterised in that the shaped article contains or consists of one or more eutectic structural constituents comprising zirconium oxide and/or hafnium oxide and at least one further high-melting metal oxide.

2. Ceramic shaped article according to claim 1, characterised in that the eutectic structural constituent(s) contain(s) beryllium oxide.

3. Ceramic shaped article according to claim 1, characterised in that the eutectic structural constituent(s) contain(s) aluminium oxide.

4. Ceramic shaped article according to claim 1 or 3, characterised in that it consists entirely or predominantly of a eutectic structural constituent comprising aluminium oxide and zirconium oxide and/or hafnium oxide.

5. Ceramic shaped article according to claim 1 or 3, characterised in that it consists entirely or predominantly of a eutectic structural constituent comprising : 1) aluminium oxide, 2) zirconium oxide and/or hafnium oxide and 3) yttrium oxide and/or magnesium oxide and/or ytterbium oxide.

6. Ceramic shaped article according to claim 1 or 3, characterised in that it consists of or contains at least two eutectic structural constituents having different melting points, at least one of the eutectic structural constituents containing yttrium oxide and/or magnesium oxide and/or ytterbium oxide.

7. Process for the manufacture of a ceramic shaped article according to any one of claims 1 to 5, characterised in that a powder is mixed in a hypoeutectic, eutectic or hypereutectic ratio, melted and, after rapid cooling, pulverised, and an article is shaped from the resulting powder and sintered or pressure-sintered.

8. Process for the manufacture of a ceramic shaped article according to any one of claims 1 to 5, characterised in that a first powder is mixed in a hypoeutectic, eutectic or hypereutectic ratio, melted and, after rapid cooling, pulverised, and pulverulent metal oxide is added to the resulting powder and an article is shaped from the mixture comprising the first powder and the powder of the metal oxide and is sintered or pressure-sintered.

9. Process for the manufacture of a ceramic shaped article according to any one of claims 1 to 5, characterised in that a first powder is mixed in a hypoeutectic, eutectic or hypereutectic ratio, melted and, after rapid cooling, pulverised and there is mixed with the resulting first powder a second powder which comprises a high-melting metal carbide, metal nitride, metal boride, metal oxide or a combination of these components, and an article is shaped from the mixture of the two powders and sintered or pressure-sintered above the melting point of the first powder and below the melting point of the lowest-melting component of the second powder.

10. Process for the manufacture of a ceramic shaped article according to claims 1 to 6, characterised in that a first powder is mixed in a hypoeutectic, eutectic or hypereutectic ratio, melted and, after rapid cooling, pulverised, and a second powder of hypoeutectic, eutectic or hypereutectic composition, which in addition contains yttrium oxide and/or magnesium oxide und/or ytterbium oxide, is mixed, melted and, after rapid cooling, pulverised, and that the first powder is mixed with the second powder and an article is shaped from the mixture and is sintered or pressure-sintered above the melting point of the lower-melting powder and below the melting point of the higher-melting powder.

11. Process for the manufacture of a ceramic shaped article according to claims 1 and 6, characterised in that a first powder is mixed in a hypoeutectic, eutectic or hypereutectic ratio, melted and, after rapid cooling, pulverised, a second powder of hypoeutectic, eutectic or hypereutectic composition, which contains yttrium oxide and/or magnesium oxide and/or ytterbium oxide, is mixed, melted and, after rapid cooling, pulverised, a further powder which comprises a high-melting metal carbide, metal nitride, metal boride, metal oxide or a combination of these components is added to the mixture of the first and second powders, and an article is shaped from the powder mixture and is sintered or pressure-sintered above the melting point of the lowest-melting powder and below the melting point of the other powders.

**Revendications**

1. Corps façonné céramique à base de matériaux durs, non métalliques, comme par exemple des carbures métalliques, des nitrures métalliques, des borures métalliques et des oxydes métalliques à point de fusion élevé, en particulier l'oxyde d'aluminium et l'oxyde de zirconium, contenant en répartition homogène de l'oxyde de zirconium et/ou de l'oxyde de hafnium en une fine granulométrie sous une forme tétragonale métastable à la température ambiante, et préparé par frittage ou compression à chaud, caractérisé en ce que le corps façonné contient un ou plusieurs constituants de structure eutectiques à base d'oxyde de zirconium et/ou oxyde de hafnium et au moins un autre oxyde métallique à point de fusion élevé, ou qu'il est constitué de ces constituants.

2. Corps façonné céramique selon la revendication 1, caractérisé en ce que le ou les constituants de structure eutectiques contiennent de l'oxyde de béryllium.

3. Corps façonné céramique selon la revendication 1, caractérisé en ce que le ou les constituants de structure eutectiques contiennent de l'oxyde d'aluminium.

4. Corps façonné céramique selon l'une quelconque des revendications 1 et 3, caractérisé en ce qu'il se compose en totalité ou en majorité d'un constituant de structure eutectique à base d'oxyde d'aluminium et d'oxyde de zirconium et/ou d'oxyde de hafnium.

5. Corps façonné céramique selon l'une quelconque des revendications 1 et 3, caractérisé en ce qu'il se compose en totalité ou en majorité d'un constituant de structure eutéctique à base 1) d'oxyde d'aluminium, 2) d'oxyde de zirconium et/ou d'oxyde de hafnium et 3) d'oxyde d'yttrium et/ou d'oxyde de magnésium et/ou d'oxyde d'ytterbium.

6. Corps façonné céramique selon l'une quelconque des revendications 1 et 3, caractérisé en ce qu'il contient au moins deux constituants de structure eutectiques de points de fusion différents, ou en est constitué, au moins l'un des constituants de structure eutectiques contenant de l'oxyde d'yttrium et/ou de l'oxyde de magnésium et/ou de l'oxyde d'ytterbium.

7. Procédé pour la préparation d'un corps façonné céramique selon l'une quelconque des revendications 1 à 5, caractérisé en ce qu'on mélange une poudre, en une proportion hypoeutectique, eutectique ou hypereutectique, on la fait fondre, et, après un refroidissement rapide, on la pulvérise, et, à partir de la poudre ainsi obtenue, on forme un corps et on le fritte ou on le fritte par compression.

8. Procédé pour la préparation d'un corps façonné céramique selon l'une quelconque des revendications 1 à 5, caractérisé en ce qu'on mélange une première poudre en une proportion hypoeutectique, eutectique ou hypereutectique, on la fait fondre et, après un refroidissement rapide, on la pulvérise et on ajoute à la poudre ainsi obtenue un oxyde métallique pulvérulent et, à partir du mélange de la première poudre et de la poudre de l'oxyde métallique, on forme un corps et on le fritte ou on le fritte par compression.

9. Procédé pour la préparation d'un corps façonné céramique selon l'une quelconque des revendications 1 à 5, caractérisé en ce qu'on mélange une première poudre, dans un rapport hypoeutectique, eutectique ou hypereutectique, on la fait fondre et, après un refroidissement rapide, on la pulvérise et on ajoute à la première poudre ainsi obtenue une deuxième poudre composée d'un carbure métallique, d'un nitrure métallique, d'un borure métallique, d'un oxyde métallique à point de fusion élevé ou d'une combinaison de ces composants, et, à partir du mélange des deux poudres, on forme un corps et on le fritte ou on le fritte par compression au-dessus du point de fusion de la première poudre et en dessous du point de fusion du composant de la deuxième poudre ayant le point de fusion le plus bas.

10. Procédé pour la préparation d'un corps façonné céramique selon l'une quelconque des revendications 1 à 6, caractérisé en ce qu'on mélange une première poudre dans une proportion hypoeutectique, eutectique ou hypereutectique, on la fait fondre et, après un refroidissement rapide, on la pulvérise, et on mélange une deuxième poudre, ayant une composition hypoeutectique, eutectique ou hypereutectique, contenant en outre de l'oxyde d'yttrium et/ou de l'oxyde de magnésium et/ou de l'oxyde d'ytterbium, on la fait fondre et, après un refroidissement rapide, on la pulvérise, et qu'on mélange la première poudre à la deuxième poudre et, à partir du mélange, on forme un corps et on fritte le corps ou on le fritte par compression au-delà du point de fusion de la poudre ayant le point de fusion le plus bas et en dessous du point de fusion de la poudre ayant le point de fusion le plus haut.

11. Procédé pour la préparation d'un corps façonné céramique selon l'une quelconque des revendications 1 et 6, caractérisé en ce qu'on mélange une première poudre, selon un rapport hypoeutectique, eutectique ou hypereutectique, on la fait fondre et, après un refroidissement rapide, on la pulvérise, on mélange une deuxième poudre ayant une composition hypoeutectique, eutectique ou hypereutectique et contenant de l'oxyde d'yttrium et/ou de l'oxyde de magnésium et/ou de l'oxyde d'ytterbium, on la fait fondre et, après un refroidissement rapide, on la pulvérise, on ajoute au mélange de la première et de la deuxième poudre une autre poudre constituée d'un carbure métallique, d'un nitrure métallique, d'un borure métallique, d'un oxyde métallique à point de fusion élevé ou d'une combinaison de ces composants et, à partir du mélange des poudres, on forme un corps et on le fritte où le fritte par compression au-dessus du point de fusion de la poudre ayant le point de fusion le plus bas et en dessous du point de fusion de l'autre poudre.